# EUROPEAN PATENT APPLICATION

(11) **EP 4 401 372 A1**
(43) Date of publication of application: **17.07.2024**
(21) Application number: 22869350.3
(22) Date of filing: 15.09.2022
(51) Int. Cl.: H04L 41/0803

(54) **HOME NETWORK BANDWIDTH MANAGEMENT METHOD AND APPARATUS, ELECTRONIC DEVICE, AND STORAGE MEDIUM**

(30) Priority: 15.09.2021 CN 202111082958
(71) Applicant: ZTE Corporation, Shenzhen, Guangdong 518057 (CN)
(72) Inventor: ZHANG, Weiliang, Shenzhen, Guangdong 518057 (CN); HUANG, Xingang, Shenzhen, Guangdong 518057 (CN); YUAN, Liquan, Shenzhen, Guangdong 518057 (CN)
(74) Representative: Canzler & Bergmeier Patentanwälte Partnerschaft mbB
(86) International application number: PCT/CN2022/119097
(87) International publication number: WO 2023/040982

(57) **Abstract**

The present disclosure relates to a home network bandwidth management method and apparatus, an electronic device, and a storage medium. The method comprises: displaying, by means of a human-computer interaction interface, configuration information of each optical network unit (ONU) in a home network to which a user terminal belongs, the configuration information comprising at least one of bandwidth and delay; and obtaining adjustment information of the ONU by means of the human-computer interaction interface, the adjustment information being used for adjusting the configuration information.

## Description

### CROSS-REFERENCE TO RELATED APPLICATIONS

The present application claims the priority of Chinese Patent Application No. 202111082958.6, filed on September 15, 2021, the contents of which are incorporated herein in their entirety by reference.

### TECHNICAL FIELD

The present application relates to the field of communications, and in particular, relates to a home network bandwidth management method, a home network bandwidth management apparatus, an electronic device, and a storage medium.

### BACKGROUND

Due to a point-to-multipoint network topology of a passive optical network and passive characteristics of an optical distribution network (ODN), standards organizations and market begin to pay attention to networking technologies using the passive optical network for home networks. An existing passive optical network and services thereof are generally managed by an operator, and any user generally does not participate in management. The home network is different from any existing telecommunication network, is a private network inside a user home, and deep participation of the user is desired in operation and management of the home network, such as an establishment of an internal network, enabling and management of home services, scheduling of internal network resources, and the like.

However, at present, the home network is managed by operators, and management of the home network by the user cannot be implemented, so that the user cannot participate in the scheduling of resources and services in the home network, and expectations of the user on the home network cannot be met.

### SUMMARY

The present application is to solve the above problems, provide a home network bandwidth management method, a home network bandwidth management apparatus, an electronic device, and a storage medium, and enable a user to manage the use of a local bandwidth in the home network.

In a first aspect, the present application provides a home network bandwidth management method, applied to a user terminal, including: displaying configuration information of each optical network unit (ONU) in a home network, to which the user terminal belongs, through a human-machine interaction interface, the configuration information including at least one of a bandwidth and a time delay; acquiring adjustment information of the ONU through the human-machine interaction interface, the adjustment information being configured for adjusting the configuration information.

In a second aspect, the present application provides a home network bandwidth management method, applied to an optical line terminal (OLT), the OLT being connected with multiple optical network units (ONUs), and the OLT and the ONUs belonging to one home network, and the method includes: transmitting configuration information of each ONU in the home network, to which a user terminal belongs, to the user terminal, so that the user terminal displays the configuration information of the ONU through a human-machine interaction interface, the configuration information including at least one of a bandwidth and a time delay; and after receiving adjustment information of the ONU transmitted by the user terminal, adjusting the configuration information according to the adjustment information.

In a third aspect, the present application provides a home network bandwidth management method, applied to an ONU, including: acquiring configuration information of each ONU in a home network from an OLT in the home network to which a user terminal belongs, and feeding back the configuration information to the user terminal, so that the user terminal displays the configuration information of the ONU through a human-machine interaction interface, the configuration information including at least one of a bandwidth and a time delay; and after receiving adjustment information of the ONU transmitted by the user terminal, transmitting the adjustment information to the OLT, the adjustment information being configured for adjusting the configuration information.

In a fourth aspect, the present application provides a home network bandwidth management apparatus, located at a user terminal, including: a display module configured to display configuration information of each ONU in a home network, to which the user terminal belongs, through a human-machine interaction interface, the configuration information including at least one of a bandwidth and a time delay; an acquisition module configured to acquire adjustment information of the ONU through the human-machine interaction interface, the adjustment information being configured for adjusting the configuration information.

In a fifth aspect, the present application provides a home network bandwidth management apparatus, located at an OLT, including: a transmission module configured to transmit configuration information of each ONU in a home network, to which a user terminal belongs, to the user terminal, so that the user terminal displays the configuration information of the ONU through a human-machine interaction interface, the configuration information including at least one of a bandwidth and a time delay; and an adjustment module configured to, after receiving adjustment information of the ONU transmitted by the user terminal, adjust the configuration information according to the adjustment information.

In a sixth aspect, the present application provides a home network bandwidth management apparatus, located at an ONU, including: an acquisition module configured to acquire configuration information of each ONU in a home network from an OLT in the home network to which a user terminal belongs, and feedback the configuration information to the user terminal, so that the user terminal displays the configuration information of the ONU through a human-machine interaction interface, the configuration information including at least one of a bandwidth and a time delay; and a transmission module configured to, after receiving adjustment information of the ONU transmitted by the user terminal, transmit the adjustment information to the OLT, the adjustment information being configured for adjusting the configuration information.

In a seventh aspect, the present application provides an electronic device, including: at least one processor; a memory communicatively connected with the at least one processor; the memory stores instructions to be executed by the at least one processor, the instructions, executed by the at least one processor, cause the at least one processor to perform the aforementioned home network bandwidth management method applied to the user terminal, or the aforementioned home network bandwidth management method applied to the OLT, or the aforementioned home network bandwidth management method applied to the ONU.

In an eighth aspect, the present application provides a computer-readable storage medium having a computer program stored thereon, the computer program, executed by a processor, causes the processor to implement the aforementioned home network bandwidth management method applied to the user terminal, or the aforementioned home network bandwidth management method applied to the OLT, or the aforementioned home network bandwidth management method applied to the ONU.

### BRIEF DESCRIPTION OF DRAWINGS

Fig. 1 is a flowchart of a home network bandwidth management method applied to a user terminal according to the present application;
Fig. 2 is a block diagram of a home network bandwidth apparatus applied to a user terminal according to the present application;
Fig. 3 is an interaction flowchart of a home network bandwidth management method according to the present application;
Fig. 4 is an interaction flowchart of a home network bandwidth management method according to the present application;
Fig. 5 is an interaction flowchart of a home network bandwidth management method according to the present application;
Fig. 6 is an interaction flowchart of a home network bandwidth management method according to the present application;
Fig. 7 is a flowchart of a home network bandwidth management method applied to an OLT according to the present application;
Fig. 8 is a flowchart of a home network bandwidth management method applied to an ONU according to the present application;
Fig. 9 is a schematic structural diagram of a home network bandwidth management apparatus located at a user terminal according to the present application;
Fig. 10 is a schematic structural diagram of a home network bandwidth management apparatus located at an OLT according to the present application;
Fig. 11 is a schematic structural diagram of a home network bandwidth management apparatus located at an ONU according to the present application; and
Fig. 12 is a schematic structural diagram of an electronic device according to the present application.

### DETAIL DESCRIPTION OF EMBODIMENTS

In order to make purposes, technical solutions, and advantages of the present application clearer, implementations of the present application are described below with reference to the accompanying drawings. It should be understood by those of ordinary skill in the art that, in each implementation of the present application, many technical details are proposed to enable readers to better understand the present application. However, the technical solutions claimed in the present application may be implemented without these technical details and various changes and modifications based on the following implementations.

An embodiment of the present application relates to a home network bandwidth management method, applied to a user terminal, and in the method, configuration information of each optical network unit (ONU) in a home network is acquired through a communication connection established with an optical transmission device in the home network to which the user terminal belongs; the configuration information includes at least one of a bandwidth and a time delay, the optical transmission device includes an optical line terminal (OLT) or the ONU (or the optical transmission device is at least one of the OLT or the ONU); the configuration information of each ONU is displayed through a human-machine interaction interface, adjustment information of the ONU is acquired through the human-machine interaction interface; the adjustment information is transmitted to the optical transmission device to adjust the configuration information. Through the above method, the present application can enable a user to participate in management of the bandwidth of the home network, so that the user can visually manage a local bandwidth, and adjust or configure the bandwidth as desired. Therefore, a participation degree of the user is improved, and the network bandwidth is enabled to be closer to the expectations of the user.

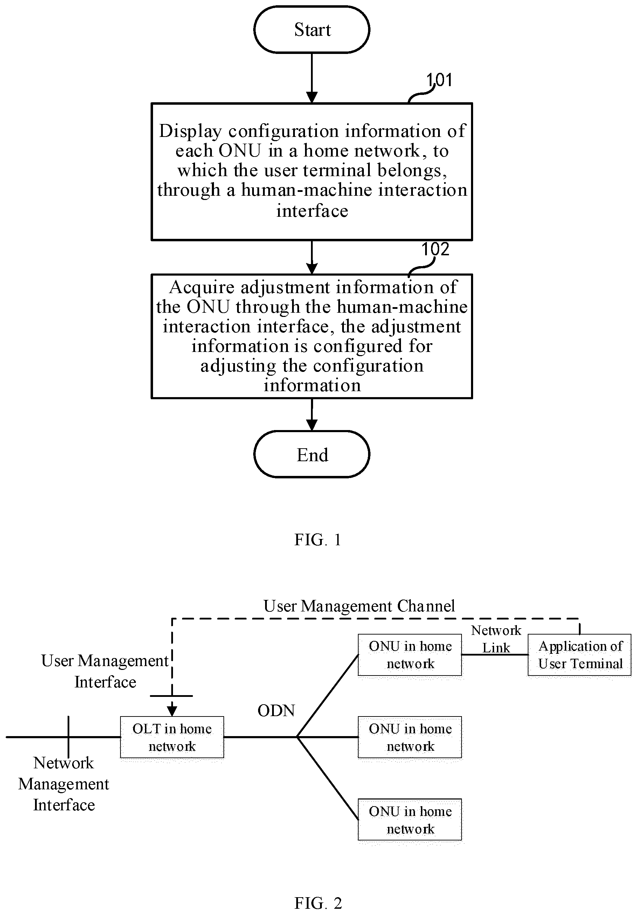

The home network bandwidth management method provided in the embodiment of the present application is described in detail below, and followings are only for facilitating understanding of implementation details of the solution, and is not necessary to implement the solution. A specific flow of the home network bandwidth management method is shown in Fig. 1, and the method may include following operations 101 and 102.

At operation 101, displaying configuration information of each ONU in a home network, to which the user terminal belongs, through a human-machine interaction interface.

Specifically, after the user terminal logs in a transmission device of the home network, a total bandwidth of the OLT to be adjusted, and a condition that the each ONU in the home network obtains the bandwidth can be checked through an application of the terminal.

In the operation, the human-machine interaction interface facilitates the user to more intuitively know current configuration information of the ONU, and thus how to adjust the configuration information of the ONU can be more clearly known.

In addition, before displaying the configuration information of the ONU in the home network, to which the user terminal belongs, through the human-machine interaction interface, the user terminal acquires the configuration information of the ONU in the home network through a communication connection established with an optical transmission device in the home network to which the user terminal belongs, the configuration information includes at least one of the bandwidth and the time delay, and the optical transmission device includes the OLT or the ONU.

The communication connection between the user terminal and the optical transmission device in the home network follow network protocols such as Internet Protocol (IP), Simple Network Management Protocol (SNMP), and the like.

In an example, a schematic diagram of user bandwidth management architecture is shown in Fig. 2, a plurality of ONUs of the home network are hung under one OLT in the home network. A dashed line in Fig. 2 is a logical management channel, and the user terminal cannot be directly connected to the OLT in the home network, but establishes the communication connection with the OLT in the home network by being connected to the ONU in the home network.

Specifically, after the communication connection is established between the user terminal and the optical transmission device in the home network, the user terminal logs in the optical transmission device in the home network, and acquires the configuration information of the ONU in the home network through the optical transmission device in the home network.

In an example, the user may access the optical transmission device in the home network through a network address, a network link, or an application interface provided by an application, and logs in the optical transmission device in the home network by a user name and a password, which subsequently may be replaced by a fingerprint login or a face login.

In an example, before the user terminal is connected to the optical transmission device in the home network, the ONU in the home network is desired to complete activation and registration on the OLT in the home network, and the activation and registration is to be completed according to a standard flow, and the flow is as follows: (1) the OLT in the home network transmits a serial number acquiring request to the ONU in the home network, and then receives a serial number uploaded by the ONU in the home network, and confirms each ONU currently connected thereto in the home network through the serial number; (2) after acquiring the serial number (which is a physical identifier herein) of the ONU in the home network, the OLT in the home network allocates a logic identifier, i.e., ONU-ID, to the ONU in the home network; (3) the OLT in the home network transmits a ranging request to the ONU in the home network, because physical distances between different ONUs and the OLT are different, a distance between each ONU and the OLT is measured through the ranging request, and in order to enable logical distances between the ONUs and the OLT to be the same, a time delay is added to the ONU closer to the OLT; (4) the OLT transmits a delay, to be locally added on the ONU, to the ONU to ensure that the logical distances between the ONUs and the OLT are the same, and finally, the OLT allocates the bandwidth to the ONUs.

At operation 102, acquiring adjustment information of the ONU through the human-machine interaction interface.

After acquiring the adjustment information of the ONU through the human-machine interaction interface, the user terminal transmits the adjustment information to the optical transmission device, so as to adjust the configuration information.

In an example, after acquiring the adjustment information of the ONU through the human-machine interaction interface, an application of the user terminal detects whether to adjust the configuration information of the ONU; in a case where the configuration information is to be adjusted, the user is prompted to adjust the configuration information. In a case where the application of the user terminal detects a confirmation instruction of the user for the displayed adjustment information of the ONU, the adjustment information that has been confirmed is taken as the acquired adjustment information of the ONU.

In the example, a reason why the user terminal can adjust the configuration information is that the OLT in the home network provides a user management interface including a bandwidth configuration interface and an authentication interface, the bandwidth configuration interface is configured for the user terminal to configure and correspondingly adjust bandwidths of other ONUs according to the bandwidth and the time delay of a certain ONU, for example, the bandwidth of the ONU is to be proportionally adjusted; and the authentication interface is configured for authenticating authentication information, such as a user name and a password, input by the user terminal.

In an example, the user increases a bandwidth of a certain ONU through an application, the bandwidths of other ONUs are correspondingly decreased; or the bandwidth of the certain ONU is decreased, and the bandwidths of the other ONUs are correspondingly increased; or the bandwidth of the certain ONU is directly set, the bandwidths of the other ONUs are correspondingly decreased or increased; or parameters such as the bandwidth and the time delay of the certain ONU are set, and the bandwidths of the other ONUs are correspondingly adjusted.

In an example, in a case where the configuration information includes a bandwidth, a sum of bandwidth adjustment amounts of the ONUs is less than a preset bandwidth adjustment amount, and the preset adjustment bandwidth amount is less than an upstream bandwidth of the OLT. Specifically, the OLT in the home network allocates a part of upstream bandwidths for the user adjusting or configuring the bandwidth as desired. The home network allocates the part of uplink bandwidths for adjusting the configuration information without affecting the part of bandwidth to be traditionally allocated.

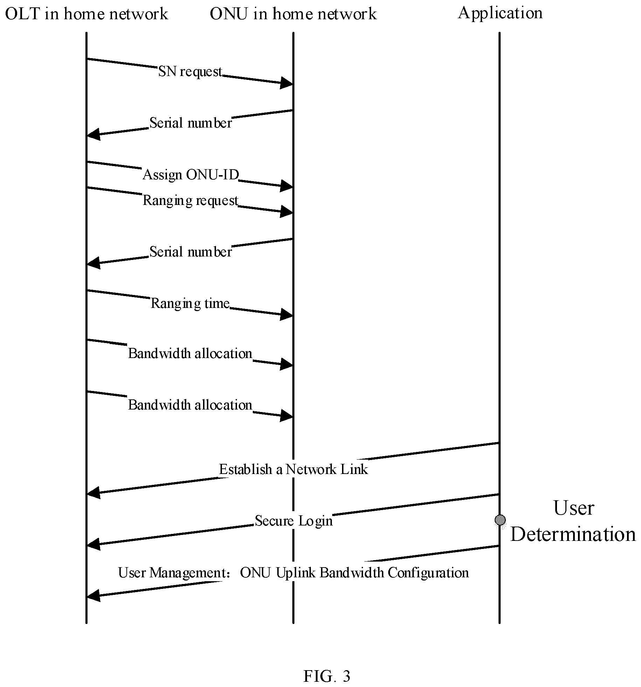

In an example, in a case where the optical transmission device establishing the communication connection with the user terminal is the OLT, the user terminal establishes the communication connection with the OLT through the ONU, and a specific interaction flow is shown in Fig. 3, and specifically includes following operations: firstly, the ONU in the home network completes activation and registration on the OLT in the home network; then, the user is connected to WiFi or a wire through a mobile phone, a tablet computer or other terminals, is connected to the ONU in the home network and is further connected to the OLT in the home network; after being connected to the OLT in the home network, the user can access the OLT in the home network through a network address, a network link, or an application interface provided by an application, and log in the OLT in the home network by a user name and a password, which subsequently may be replaced by a fingerprint login or a face login; after the user terminal logs in a transmission device of the home network, a total bandwidth of the OLT to be adjusted, and a condition that each ONU in the home network obtains the bandwidth can be checked by an application of the terminal, and the user can adjust the bandwidth of the ONU in the home network through the application; finally, the user terminal transmits the adjustment information of the ONU to the OLT through the communication connection, and the OLT adjusts the configuration information according to the adjustment information.

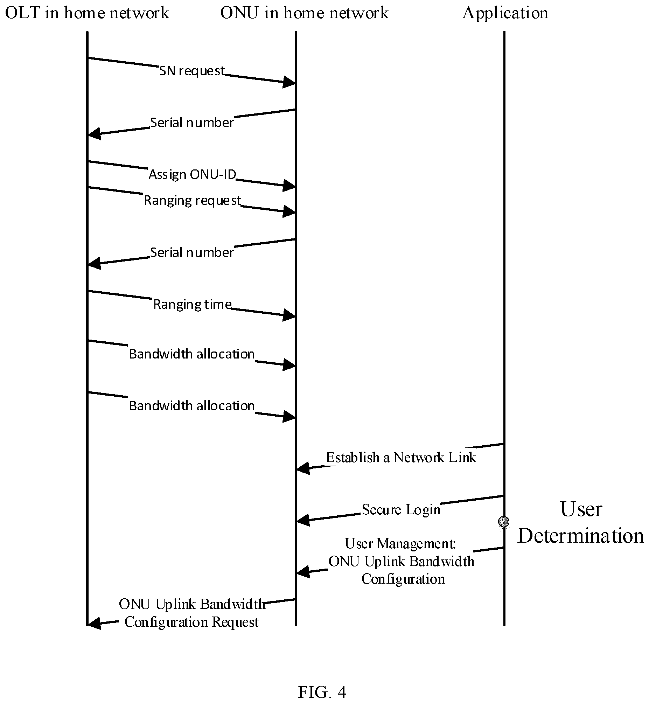

In an example, in a case where the optical transmission device establishing the communication connection with the user terminal is the ONU, and a specific interaction flow is shown in Fig. 4, and specifically includes following operations: firstly, the ONU in the home network completes activation and registration on the OLT in the home network; then, the user is connected to WiFi or a wire through a mobile phone, a tablet computer or other terminals, and is connected to the ONU in the home network, after being connected to the ONU in the home network, the user can access the ONU in the home network through a network address, a network link, or an application interface provided by an application, and log in the OLT in the home network by a user name and a password, which subsequently may be replaced by a fingerprint login or a face login; after logging in the ONU in the home network, the user may transmit a request message for acquiring the configuration information to the ONU in the home network through an application of the terminal, the ONU forwards the request message for acquiring the configuration information to the OLT in the home network, and finally the user terminal receives the configuration information fed back by the OLT and forwarded by the ONU; through the above manner, the user can check a total bandwidth of the OLT to be adjusted, and a condition that each ONU in the home network obtains the bandwidth; finally, the user terminal transmits the adjustment information to the ONU, the ONU forwards the adjustment information to the OLT, and the OLT adjusts the configuration information according to the adjustment information.

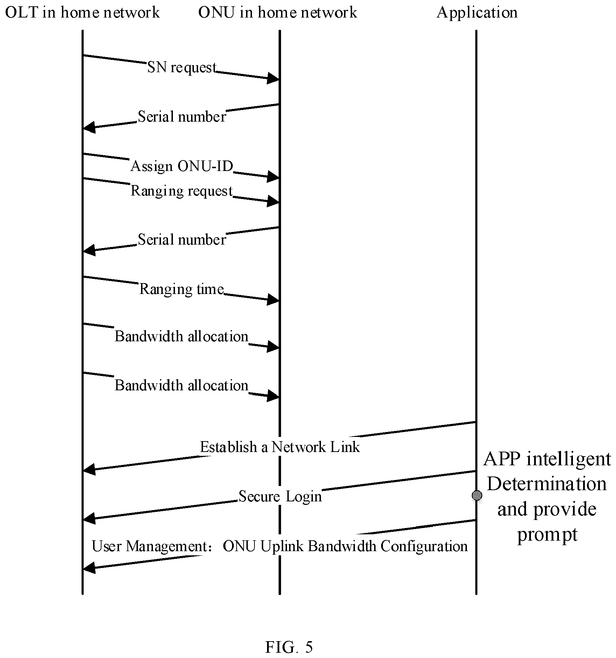

In an example, in a case where the optical transmission device establishing the communication connection with the user terminal is the OLT, the application of the user terminal actively acquires bandwidth allocation and service conditions of the ONU in the home network from the OLT in the home network, the application intelligently determines whether a bandwidth of each ONU in the home network is sufficient or redundant, and gives a prompt to the user terminal, and the user terminal adjusts the bandwidths of the ONUs of the home network according to the prompt, and a specific flowchart is shown in Fig. 5.

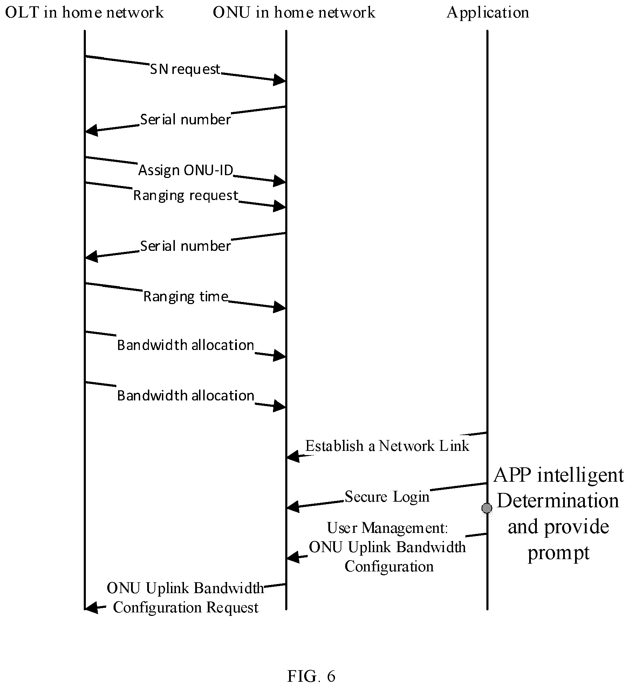

In an example, in a case where the optical transmission device establishing the communication connection with the user terminal is the ONU, the application of the user terminal actively acquires bandwidth allocation and service conditions of the ONU in the home network from the ONU in the home network, if a condition of the present ONU in the home network is acquired, the condition is fed back to the user in time, if a condition of any other ONU in the home network is acquired, a request is transmitted to the OLT in the home network to acquire the condition of the present ONU in the home network. The application intelligently determines whether a bandwidth of each ONU in the home network is sufficient or redundant, and gives a prompt to the user terminal, and the user terminal adjusts the bandwidths of the ONUs of the home network according to the prompt, and a specific flowchart is shown in Fig. 6.

The home network bandwidth management method provided in the embodiment of the present application can enable the user to participate in the management of the bandwidth of the home network, so that the user can visually manage the local bandwidth, provides a function of intelligently determining the condition of the bandwidth allocation of each ONU by the application of the user terminal, and the user can adjust or configure the bandwidth as desired, the participation degree of the user is improved, and the network bandwidth is enabled to be closer to the expectation of the user.

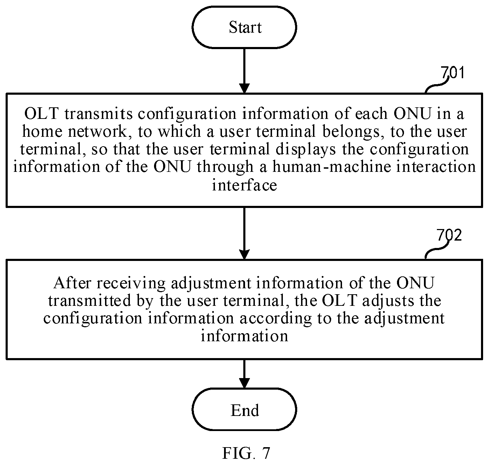

An embodiment of the present application relates to a home network bandwidth management method, applied to an OLT, the home network bandwidth management method provided in the embodiment of the present application is described in detail below, and followings are only for facilitating understanding of implementation details of the solution, and is not necessary to implement the solution. A specific flow of the home network bandwidth management method is shown in Fig. 7, and may include following operations 701 and 702.

At operation 701, the OLT transmits configuration information of each ONU in a home network, to which a user terminal belongs, to the user terminal, so that the user terminal displays the configuration information of the ONU through a human-machine interaction interface, the configuration information including at least one of a bandwidth and a time delay.

In an example, before transmitting the configuration information of the ONU in the home network, to which the user terminal belongs, to the user terminal, the OLT establishes a communication connection with the user terminal, since the user terminal cannot be directly connected to the OLT, the OLT is to obtain a request message transmitted by the user terminal through the ONU connected thereto, that is, the user is connected to the ONU in the home network, and then is further connected to the OLT in the home network.

At operation 702, after receiving adjustment information of the ONU transmitted by the user terminal, the OLT adjusts the configuration information according to the adjustment information.

In an example, after the user transmits the adjustment information of the ONU through an application of the terminal, the OLT receives the adjustment information of the ONU transmitted by the user terminal, and adjusts the configuration information according to the adjustment information.

The home network bandwidth management method provided in the embodiment of the present application can enable the user to participate in the management of the bandwidth of the home network, so that the user can visually manage the local bandwidth, and the user can adjust or configure the bandwidth as desired, the participation degree of the user is improved.

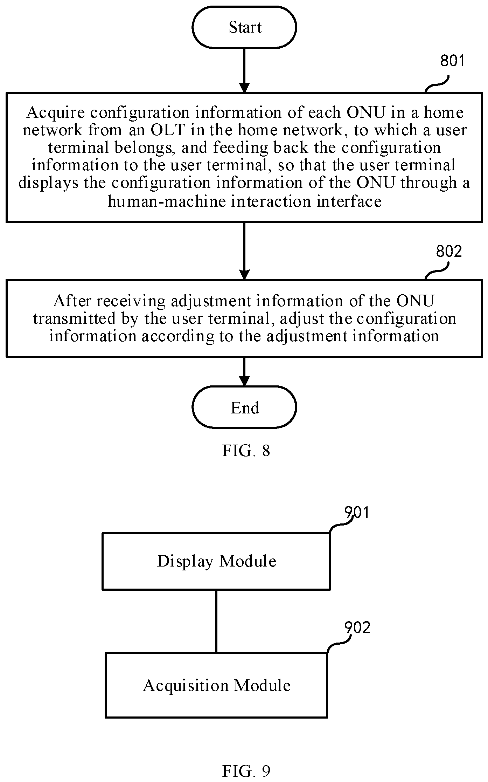

An embodiment of the present application relates to a home network bandwidth management method, applied to an ONU, the home network bandwidth management method provided in the embodiment of the present application is described in detail below, and followings are only for facilitating understanding of implementation details of the solution, and is not necessary to implement the solution. A specific flow of the home network bandwidth management method is shown in Fig. 8, and may include following operations 801 and 802.

At operation 801, acquiring configuration information of each ONU (including the ONU itself) in a home network from an OLT in the home network to which a user terminal belongs, and feeding back the acquired configuration information to the user terminal, so that the user terminal displays the configuration information of the ONU through a human-machine interaction interface, the configuration information including at least one of a bandwidth and a time delay.

In addition, before acquiring the configuration information of the ONU in the home network from the OLT in the home network, the ONU receives a request message transmitted by the user terminal and forwards the request message to the OLT in the home network to which the ONU belongs, the request message is configured for acquiring the configuration information of the ONU in the home network.

Specifically, after receiving the request information of the user terminal for acquiring the configuration information, the ONU forwards the request information for acquiring the configuration information to the OLT, and then the ONU receives the configuration information of the ONU fed back from the OLT, feeds back the received configuration information to the user terminal, and the configuration information of the ONU is displayed on the human-machine interaction interface of the user terminal.

In an example, before the ONU receives the request message transmitted by the user terminal, the user is desired to be connected to the ONU in the home network and access the home network, and through the above operation, the ONU can receive the request message transmitted by the user terminal smoothly.

At operation 802, after receiving adjustment information of the ONU transmitted by the user terminal, adjusting the configuration information according to the adjustment information.

In an example, the ONU receives the adjustment information of the ONU transmitted by the user through an application of the terminal, and forwards the adjustment information to the OLT, and the OLT adjusts the configuration information according to received adjustment information.

The home network bandwidth management method provided in the embodiment of the present application can enable the user to participate in the management of the bandwidth of the home network, so that the user can visually manage the local bandwidth, and the user can adjust or configure the bandwidth as desired, the participation degree of the user is improved.

The operation division of the above method is only for a purpose of clear description, during implementing the method, some operations may be combined into one operation or one operation may be split into several operations, as long as the same logical relationship is included in the method, the method is within the protection scope of the present application; if unimportant modifications are added to the method or process or unimportant designs are introduced in the method or process, as long as the core design of the method or process is not change, the method or process is still within the protection scope of the present application.

An embodiment of the present application further provides a home network bandwidth management apparatus, located at a user terminal, as shown in Fig.9, including a display module 901 and an acquisition module 902.

Specifically, the display module 901 is configured to display configuration information of each ONU in a home network, to which the user terminal belongs, through a human-machine interaction interface, the configuration information includes at least one of a bandwidth and a time delay; and the acquisition module 902 is configured to acquire adjustment information of the ONU through the human-machine interaction interface; the adjustment information is configured for adjusting the configuration information.

In an example, before the configuration information of the ONU in the home network to which the user terminal belongs is displayed through the human-machine interaction interface, the user terminal establishes a communication connection with an optical transmission device in the home network, and the user logs in the optical transmission device in the home network, and then acquires the configuration information of the ONU in the home network through the optical transmission device in the home network.

In an example, before the user terminal is connected to the optical transmission device in the home network, the ONU in the home network completes activation and registration on the OLT in the home network.

In an example, after the user logs in the home network transmission device, the acquisition module 902 acquires, through an application of the terminal, a total bandwidth of the OLT to be adjusted and a condition that each ONU in the home network obtains the bandwidth.

In an example, after acquiring the adjustment information of the ONU through the human-machine interaction interface, an application of the user terminal detects whether to adjust the configuration information of the ONU; in a case where the configuration information is to be adjusted, the user is prompted to adjust the configuration information, in a case where the application of the user terminal detects a confirmation instruction of the user for the displayed adjustment information of the ONU, the adjustment information that has been confirmed is taken as the acquired adjustment information of the ONU.

In an example, the acquisition module 902 increases a bandwidth of a certain ONU through an application, the bandwidths of other ONUs are correspondingly decreased; or the bandwidth of the certain ONU is decreased, and the bandwidths of the other ONUs are correspondingly increased; or the bandwidth of the certain ONU is directly set, the bandwidths of the other ONUs are correspondingly decreased or increased; or parameters such as the bandwidth and the time delay of the certain ONU are set, and the bandwidths of the other ONUs are correspondingly adjusted.

The home network bandwidth management apparatus provided in the embodiment of the present application can enable the user to participate in the management of the bandwidth of the home network, so that the user can visually manage the local bandwidth, provides a function of intelligently determining the condition of the bandwidth allocation of each ONU by the application of the user terminal, and the user can adjust or configure the bandwidth as desired, the participation degree of the user is improved, and the network bandwidth is enabled to be closer to the expectation of the user.

It should be understood that the apparatus in the embodiment is corresponding to the home network bandwidth management method applied to the user terminal in the above embodiment, and the apparatus can be implemented in cooperation with the home network bandwidth management method applied to the user terminal. The relevant technical details mentioned in the home network bandwidth management method applied to the user terminal in the above embodiment are still valid in the apparatus in the embodiment, and thus are not repeated herein. Accordingly, the related technical details mentioned in the apparatus in the embodiment can also be applied to the home network bandwidth management method applied to the user terminal in the above embodiment.

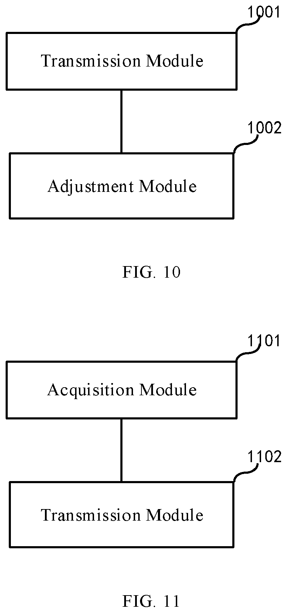

An embodiment of the present application further provides a home network bandwidth management apparatus, located at an OLT, as shown in Fig. 10, including a transmission module 1001 and an adjustment module 1002.

Specifically, the transmission module 1001 is configured to transmit configuration information of each ONU in a home network, to which a user terminal belongs, to the user terminal, so that the user terminal displays the configuration information of the ONU through a human-machine interaction interface, the configuration information includes at least one of a bandwidth and a time delay; the adjustment module 1002 is configured to, after receiving adjustment information of the ONU transmitted by the user terminal, adjust the configuration information according to the adjustment information.

In an example, before transmitting the configuration information of the ONU in the home network, to which the user terminal belongs, to the user terminal, the OLT establishes a communication connection with the user terminal, since the user terminal cannot be directly connected to the OLT, the OLT is to acquire a request message transmitted by the user terminal through the ONU connected thereto, that is, the user is connected to the ONU in the home network, and then is further connected to the OLT in the home network.

The home network bandwidth management apparatus provided in the embodiment of the present application can enable the user to participate in the management of the bandwidth of the home network, so that the user can visually manage the local bandwidth, and the user can adjust or configure the bandwidth as desired, the participation degree of the user is improved.

It should be understood that the apparatus in the embodiment is corresponding to the home network bandwidth management method applied to the OLT in the above embodiment, and the apparatus can be implemented in cooperation with the home network bandwidth management method applied to the OLT. The relevant technical details mentioned in the home network bandwidth management method applied to the OLT in the above embodiment are still valid in the apparatus in the embodiment, and are not repeated herein. Accordingly, the related technical details mentioned in the apparatus in the embodiment can also be applied to the home network bandwidth management method applied to the OLT in the above embodiment.

An embodiment of the present application further provides a home network bandwidth management apparatus, located at an ONU, as shown in Fig. 11, including an acquisition module 1101 and a transmission module 1102.

Specifically, the acquisition module 1101 is configured to acquire configuration information of each ONU in a home network from an OLT in the home network to which a user terminal belongs, and feedback the acquired configuration information to the user terminal, so that the user terminal displays the configuration information of the ONU through a human-machine interaction interface, the configuration information includes at least one of a bandwidth and a time delay; the transmission module 1102 is configured to, after receiving adjustment information of the ONU transmitted by the user terminal, transmit the adjustment information to the OLT, the adjustment information is configured for adjusting the configuration information.

Before acquiring the configuration information of the ONU in the home network from the OLT in the home network, the ONU receives a request message transmitted by the user terminal and forwards the request message to the OLT in the home network to which the ONU belongs, the request message is configured for acquiring the configuration information of the ONU in the home network.

In an example, after receiving the request information of the user terminal for acquiring the configuration information, the ONU forwards the request information for acquiring the configuration information to the OLT, and then the ONU receives the configuration information of the ONU fed back from the OLT, feeds back the configuration information to the user terminal, and the configuration information of the ONU is displayed on the human-machine interaction interface of the user terminal.

The home network bandwidth management apparatus provided in the embodiment of the present application can enable the user to participate in the management of the bandwidth of the home network, so that the user can visually manage the local bandwidth, and the user can adjust or configure the bandwidth as desired, the participation degree of the user is improved.

It should be understood that the apparatus in the embodiment is corresponding to the home network bandwidth management method applied to the ONU in the above embodiment, and the apparatus can be implemented in cooperation with the home network bandwidth management method applied to the ONU. The relevant technical details mentioned in the home network bandwidth management method applied to the ONU in the above embodiment are still valid in the apparatus in the embodiment, and are not repeated herein. Accordingly, the related technical details mentioned in the apparatus in the embodiment can also be applied to the home network bandwidth management method applied to the ONU in the above embodiment.

It should be noted that, each module related in the embodiments is a logic module, and in practical applications, each logic component may be one physical component, may be a part of one physical component, or may be implemented by a combination of multiple physical components. In addition, in order to highlight the innovative part of the present application, some components being less closely related to solving the technical problem proposed by the present application is not introduced in the embodiments, but it does not indicate that there are no other components in the embodiments.

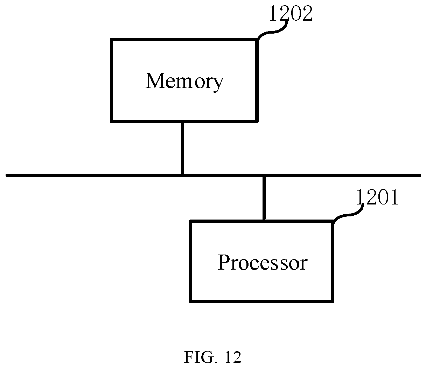

An embodiment of the present application further provides an electronic device, and as shown in Fig. 12, the electronic device includes: at least one processor 1201; and a memory 1202 communicatively connected with the at least one processor 1201; the memory 1202 stores instructions to be executed by the at least one processor 1201, the instructions, executed by the at least one processor 1201, cause the at least one processor 1201 to perform the home network bandwidth management method applied to the user terminal, the home network bandwidth management method applied to the OLT, or the home network bandwidth management method applied to the ONU, as described above.

The memory and processor are connected through a bus, the bus may include any number of interconnected buses and bridges, and connects various circuits of one or more processors and the memory together. The bus may further connect together various circuits of peripherals, voltage regulators, power management circuits, and the like, which are well known in the art, and thus are not repeated here. A bus interface provides an interface between the bus and a transceiver. The transceiver may be one element or a plurality of elements, such as a plurality of receivers and transmitters, providing a means for communicating with various other apparatuses over a transmission medium. Data processed by the processor is transmitted over a wireless medium through an antenna, and further, the antenna receives data and transmits the data to the processor.

The processor manages the bus, performs general processing, and may further provide various functions including timing, peripheral interfaces, voltage regulation, power management, and other control functions. The memory may be configured to store data used by the processor in performing operations.

The above product can execute the method provided by the present application, has corresponding functional modules and beneficial effects of executing the method, the technical details not described herein may be referred to from the method provided by the present application.

An embodiment of the present application further provides a computer-readable storage medium having a computer program stored thereon, the computer program, executed by a processor, causes the processor to implement any home network bandwidth management method described above.

It should be understood, by those skilled in the art, that all or part of the operations in the method described above may be implemented by a program instructing related hardware, the program is stored in a storage medium and includes several instructions for causing a device (which may be a single-chip computer, a chip, or the like) or a processor to execute all or part of operations of the method provided in the present application. The aforementioned storage medium includes: a U-disk, a read-only memory (ROM), a random access memory (RAM), a removable hard disk, a magnetic disk, an optical disk, or various medium capable of storing program codes.

It should be understood by those skilled in the art that the above embodiments or implementations are examples of embodiments or implementations of the present application, in practical applications, various changes in form and details may be made without departing from the scope and spirit of the present application.

## Claims

1. A home network bandwidth management method, applied to a user terminal, comprising:
displaying configuration information of each optical network unit (ONU) in a home network, to which the user terminal belongs, through a human-machine interaction interface, wherein the configuration information comprises at least one of a bandwidth and a time delay;
acquiring adjustment information of the ONU through the human-machine interaction interface, wherein the adjustment information is configured for adjusting the configuration information.

2. The method of claim 1, further comprising:
before displaying the configuration information of the ONU in the home network, to which the user terminal belongs, through the human-machine interaction interface, acquiring the configuration information of the ONU in the home network through a communication connection established with an optical transmission device in the home network to which the user terminal belongs, wherein the optical transmission device comprises an optical line terminal (OLT) or the ONU; and
after acquiring the adjustment information of the ONU through the human-machine interaction interface, transmitting the adjustment information to the optical transmission device.

3. The method of claim 2, further comprising:
in response to that the optical transmission device comprises the OLT, and before acquiring the configuration information of the ONU in the home network, to which the user terminal belongs, through the communication connection established with the optical transmission device in the home network to which the user terminal belongs, establishing a communication connection with the OLT,
wherein the transmitting the adjustment information to the optical transmission device comprises:
transmitting the adjustment information of the ONU to the OLT through a transparent transmission of the ONU via the communication connection, so that the OLT adjusts the configuration information according to the adjustment information.

4. The method of claim 2, wherein in response to that the optical transmission device comprises the ONU,
the acquiring the configuration information of the ONU in the home network through a communication connection established with an optical transmission device in the home network to which the user terminal belongs comprises:
transmitting a request message for acquiring the configuration information to the ONU, so that the ONU forwards the request message to the OLT in the home network; and
receiving the configuration information fed back by the OLT and forwarded by the ONU,
wherein the transmitting the adjustment information to the optical transmission device comprises:
transmitting the adjustment information to the ONU, so that the ONU forwards the adjustment information to the OLT.

5. The method of any of claims 1 to 4, wherein in response to that the configuration information comprises the bandwidth, the acquiring adjustment information of the ONU through the human-machine interaction interface comprises:
receiving a bandwidth of a target ONU configured by a user through the human-machine interaction interface,
wherein in bandwidths of ONUs displayed on the human-machine interaction interface, the bandwidths of other ONUs except the target ONU are changed along with a change of the bandwidth of the target ONU.

6. The method of any of claims 1 to 4, further comprising:
before displaying the configuration information of the ONU in the home network, to which the user terminal belongs, through the human-machine interaction interface, detecting whether to adjust the configuration information of the ONU; and
in response to that the configuration information is to be adjusted, triggering to displaying the configuration information of the ONU in the home network, to which the user terminal belongs, through the human-machine interaction interface, wherein the human-machine interaction interface is configured to display the adjustment information of the ONU,
wherein the acquiring adjustment information of the ONU through the human-machine interaction interface comprises:
after a confirmation instruction of the user for the adjustment information of the ONU being displayed is detected, taking the adjustment information that has been confirmed as the adjustment information of the ONU acquired.

7. The method of any of claims 1 to 4, wherein the adjustment information of the ONU comprises one or any combination of followings:
a bandwidth adjustment amount of the ONU, a bandwidth configuration amount of the ONU, or a time delay parameter of the ONU.

8. The method of any of claims 1 to 4, wherein in response to that the configuration information comprises the bandwidth, a sum of bandwidth adjustment amounts of ONUs is less than a preset bandwidth adjustment amount, and the preset adjustment bandwidth amount is less than an upstream bandwidth of the OLT.

9. The method of any of claims 2 to 4, further comprising:
before displaying the configuration information of the ONU in the home network, to which the user terminal belongs, through the human-machine interaction interface, initiating an access request to the optical transmission device through a network address, a network link, or an application program installed in the user terminal, and transmitting authentication information for identity verification to the optical transmission device.

10. A home network bandwidth management method, applied to an OLT connected with a plurality of ONUs, the OLT and the ONUs belonging to one home network, the method comprising:
transmitting configuration information of each ONU in a home network, to which a user terminal belongs, to the user terminal, so that the user terminal displays the configuration information of the ONU through a human-machine interaction interface, wherein the configuration information comprises at least one of a bandwidth and a time delay; and
after receiving adjustment information of the ONU transmitted by the user terminal, adjusting the configuration information according to the adjustment information.

11. A home network bandwidth management method, applied to an ONU, comprising:
acquiring configuration information of each ONU in a home network from an OLT in the home network to which a user terminal belongs, and feeding back the configuration information to the user terminal, so that the user terminal displays the configuration information of the ONU through a human-machine interaction interface, wherein the configuration information comprises at least one of a bandwidth and a time delay; and
after receiving adjustment information of the ONU transmitted by the user terminal, transmitting the adjustment information to the OLT, wherein the adjustment information is configured for adjusting the configuration information.

12. A home network bandwidth management apparatus, located at a user terminal, comprising:
a display module configured to display configuration information of each ONU in a home network, to which the user terminal belongs, through a human-machine interaction interface, wherein the configuration information comprises at least one of a bandwidth and a time delay;
an acquisition module configured to acquire adjustment information of the ONU through the human-machine interaction interface,
wherein the adjustment information is configured for adjusting the configuration information.

13. A home network bandwidth management apparatus, located at an OLT, comprising:
a transmission module configured to transmit configuration information of each ONU in a home network, to which a user terminal belongs, to the user terminal, so that the user terminal displays the configuration information of the ONU through a human-machine interaction interface, wherein the configuration information comprises at least one of a bandwidth and a time delay;
an adjustment module configured to, after receiving adjustment information of the ONU transmitted by the user terminal, adjust the configuration information according to the adjustment information.

14. A home network bandwidth management apparatus, located at an ONU, comprising:
an acquisition module configured to acquire configuration information of each ONU in a home network from an OLT in the home network to which a user terminal belongs, and feedback the configuration information to the user terminal, so that the user terminal displays the configuration information of the ONU through a human-machine interaction interface, wherein the configuration information comprises at least one of a bandwidth and a time delay;
a transmission module configured to, after receiving adjustment information of the ONU transmitted by the user terminal, transmit the adjustment information to the OLT, wherein the adjustment information is configured for adjusting the configuration information.

15. An electronic device, comprising:
at least one processor; and
a memory communicatively connected with the at least one processor,
wherein the memory stores instructions to be executed by the at least one processor, the instructions, executed by the at least one processor, cause the at least one processor to perform the home network bandwidth management method of any one of claims 1 to 9, or the home network bandwidth management method of claim 10, or the home network bandwidth management method of claim 11.

16. A computer-readable storage medium having a computer program stored thereon, the computer program, executed by a processor, causes the processor to implement the home network bandwidth management method of any one of claims 1 to 9, or the home network bandwidth management method of claim 10, or the home network bandwidth management method of claim 11.
